# EUROPEAN PATENT APPLICATION

(11) **EP 4 404 010 A1**
(43) Date of publication of application: **24.07.2024**
(21) Application number: 23000011.9
(22) Date of filing: 20.01.2023
(51) Int. Cl.: G05B 19/418, B26D 7/32, B26D 5/00, B26F 1/38, G06Q 10/08

(54) **VIDEO INSPECTION SYSTEM OF THE FABRIC CUTTING OPERATION**

(71) Applicant: FBV-Electromits S.r.l., 300078 Timisoara city, Timis county (RO)
(72) Inventor: Stefan, Ionut-Gabriel, Lugoj city, Timis county (RO); Florea, Sorin-Daniel, Lugoj city, Timis county (RO); Hobincu, Radu, Bucuresti (RO); Bîra, Calin, Bucuresti (RO)

(57) **Abstract**

The invention relates to a system for video inspection of the fabric cutting operation, video inspection of the fabric prior to cutting and selective collection of the finished products mounted on an automatic laser/knife cutting coordinated cutting equipment, wherein, the textile material unwound and conveyed by means of a conveyor **(5)** is passed through a first textile material video inspection subsystem **(4)** which transmits information to a defect marking assembly **(6)** arranged at the top of the conveyor **(5)** downstream of the cutting machine **(7)** and the cutting area, a second textile material cutting operoptimisationation video inspection subsystem **(9)** is installed after video inspections and marking of textile material defects and cutting defects with a defect marking assembly **(10),** the cut pieces **(8)** are transported to a modular pick-up and gripping assembly **(12)** and then toptimisationo a pulling system **(14)** for the cut piece **(8),** to be subsequently transported to collection crates **(15)** or to a waste material collection assembly **(13),** the collection crates **(15)** being part of a storage subsystem **(16),** the cut pieces of textile material being placed underneath a storage subsystem **(17)** in waiting crates, the positioning of the collection crates **(15)** with cut pieces on each level being performed by a crate handling device **(18),** and the level change being performed by a crate transfer device between levels/crate lift **(19s** , **19d),** a crate positioning and locking device on the lift **(20)** checking and correcting the position of each crate before it is taken over by a crate handling device **(18).**

## Description

The invention relates to a system for video inspection of the textile cutting operation, video inspection of the textile material before cutting and selective collection of the finished products.

From WO2004030876A1 is known a cutting plant designed to stack pieces of textile material, taking into account the particular distortions of the individual pieces of textile material, so that the positions of the predefined marking points on the pieces of material are aligned one above the other. This operation is carried out by recording the particular distortions of the pieces of fabric and stacking said pieces. The pieces of fabric which have been stacked one on top of the other in the correct position shall be cut in groups, the average distortion present in the stack being determined with one or more cameras or other devices for inspecting the strip of fabric as it is pulled from the bale. The camera(s) form a detection device for marking the points provided on the web of material, the corresponding camera images or measurement data being subsequently supplied to a control device which controls the cutting system.

It is well known that, in the automotive industry, quality and performance requirements are much more stringent, as they are directly involved in the safety systems in vehicles, which can prevent serious accidents and even death.

The invention describes an app for textile parts that measures each part in real time and selects good parts from scrap. In the industrial production process of textile parts for road vehicles, one of the steps is the use of laser/knife equipment for automatic cutting of components from certain types of textile materials. The shapes of these components are saved in specific CAD files, which also specify a set of strict tolerances that the component must meet in order to be used. Of all the performance criteria needed to ensure product quality, two are critical: validation of the correct cutting of parts to file tolerances and traceability of these parts in the production process, i.e. storing the information needed to quickly and accurately identify problems when they occur.

Although quality is an important indicator for these products and the cost needs to be kept as competitive as possible, which is why we have also developed an automatic textile unloading system.

The implemented system is currently being used on a production line, with the expected results.

The proposed system also automates the collection process of textile pieces cut with laser/cutting machines, so that their quality check is done automatically and with the highest accuracy, and finally the correct and incorrect parts are collected separately.

Auxiliary systems are also used in the video inspection system for cutting textile material and selective collection of finished products, in the sense that they are not the purpose of the present invention, but are necessary and mandatory for the operation of the system, such as the traceability system and the database.

The main problem with the template-based evaluation method is, on one hand, that it has significant errors, which result in faulty parts being introduced into subsequent production processes and, on the other hand, that it is an extremely slow process, which depends on the number of measurement dimensions defined in the CAD file. If the part is validated in error, there are three scenarios:
- in the most favorable case, it is detected during the subsequent processes in the company and taken out of production;
- the product is detected as faulty and returned by the customer;
- in the worst case, the defective product is installed in a vehicle and endangers the safety of passengers.

The invention proposed for patent is aimed at automating the inspection of the cutting operation of the textile material and the selective collection of the products resulting from the cutting process, an inspection which is carried out to eliminate the source of errors due to the human factor and to improve the traceability information, by means of rapid and efficient analysis of the process information, to determine and eliminate the sources of errors and to produce relevant statistics for subsequent optimisation.

The technical problem solved by this invention consists in the automation of the inspection operation, which is based on computer techniques that allow the processing of the image of the part, the identification of the part from a database, as well as the automatic evaluation of the dimensions quoted and the automation of the sorting and selective collection operations of the parts resulting from cutting.

The system, according to the invention, consists of a first subsystem for video inspection of the textile material, which transmits information to a defect marking assembly, which is mounted at the top of the conveyor. Downstream of the cutting machine and the cutting area is mounted a second subsystem for video inspection of the cutting operation of the textile material and a defect marking assembly. After the second video inspection and defect marking, it is to be conveyed to a cut piece pick-up and gripping assembly. The cut textile pieces are picked up by a pulling subsystem and then transported to collection crates or a waste material collection assembly. The cut piece pick-up and gripping assembly is modular in configuration and consists of pistons and suction cups, distributed over the width of the conveyor, the cut pieces being picked up and released into collection bins. These are part of a storage sub-system for cut pieces crates under which a storage sub-system for waiting crates is arranged. The positioning of the cut-piece collection crates on each level is done by a crate handling device and the level change by a crate transfer device between levels / crate lift. A crate positioning and locking device on the lift checks and corrects the position of each crate before it is picked up by a crate handling device.

The system, according to the invention, further comprises image collection equipment, consisting of one or more cameras, processing equipment with graphic accelerator, an encoder, user authentication equipment and equipment for reading traceability data.

The advantages of this system are:
- is functional and can used in production;
- can be used for the detection of material defects and for the detection of cutting defects;
- the possibility of being applied globally to other types of products;
- reducing production costs;
- substantial reduction in the number of defects and therefore improvement in quality;
- automatic measurement with accuracy far superior to a human operator;
- the measuring process does not impact the cutting process in terms of the time required to perform the inspection, the inspection of the material is performed during the movement of the belt, thus only the alignment and measuring steps need to fit into the time budget in order not to slow down the conveyor movement.

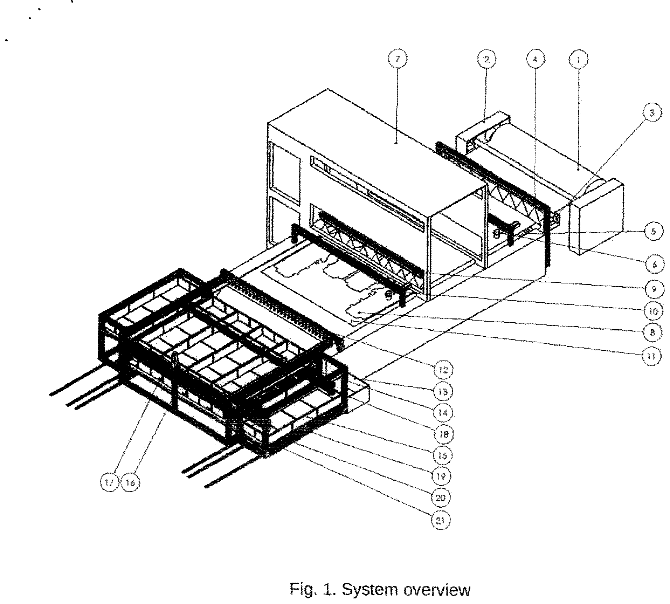

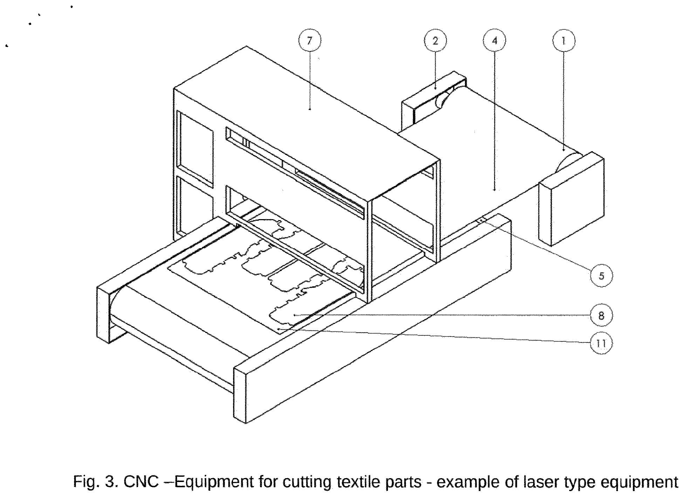

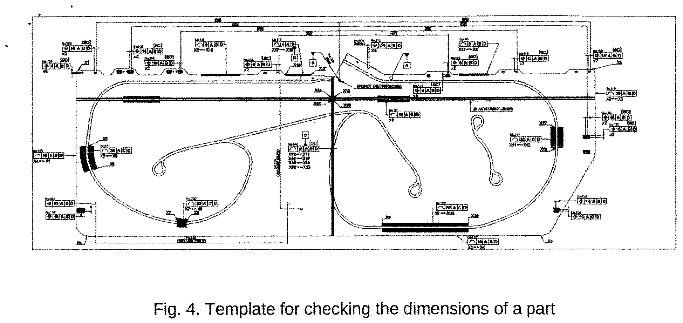

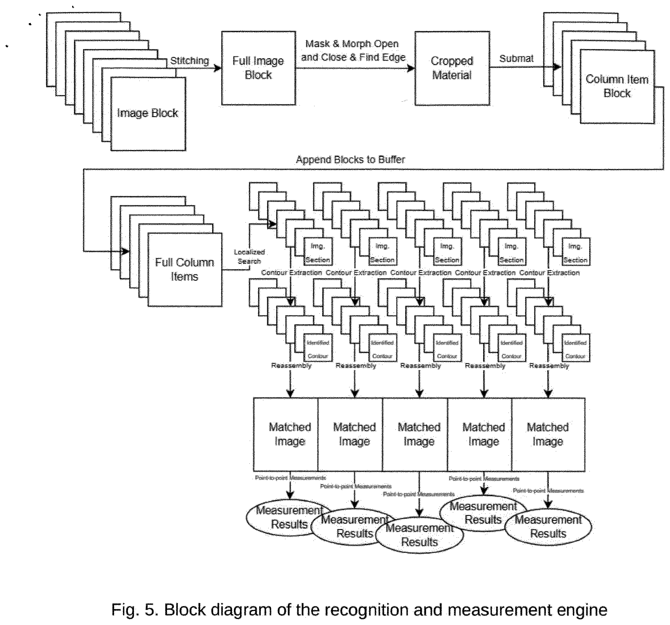

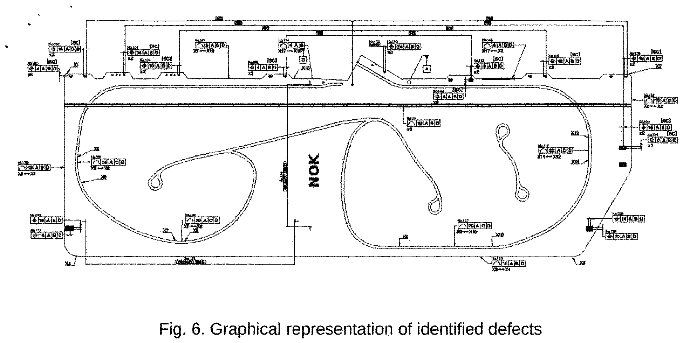

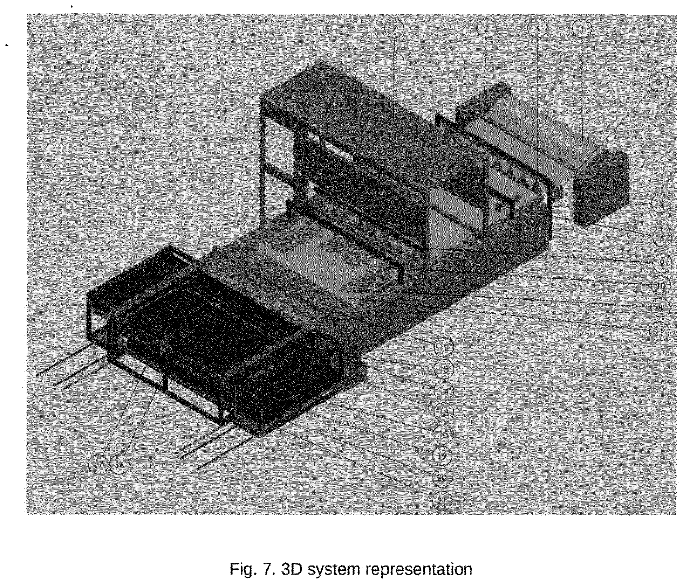

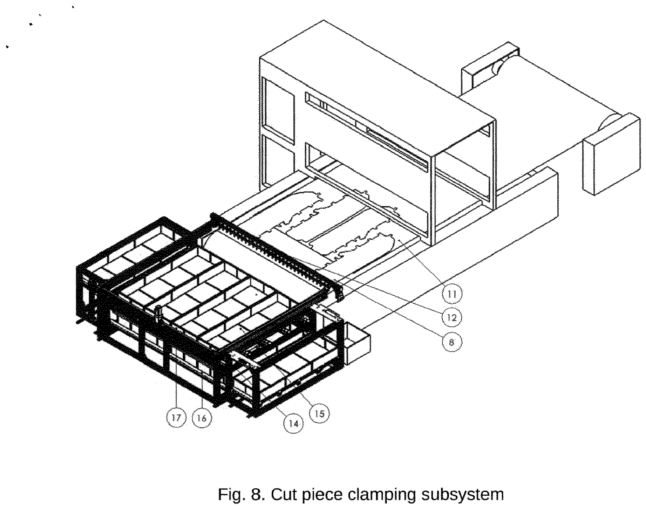

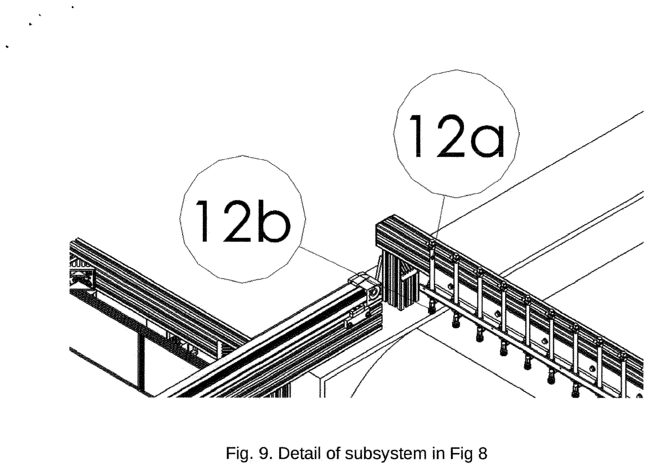

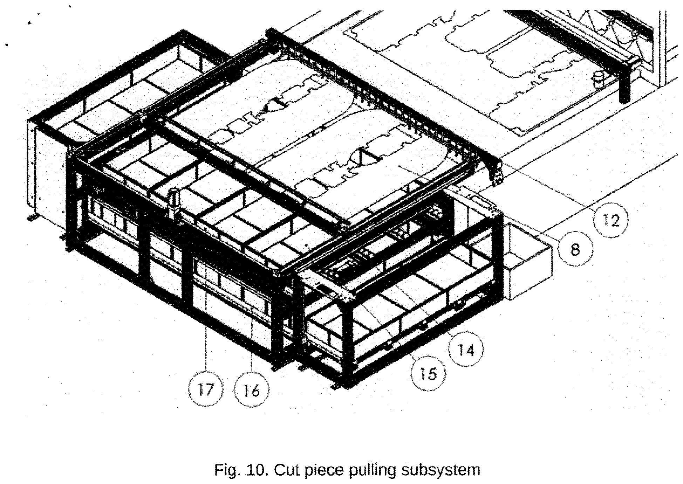

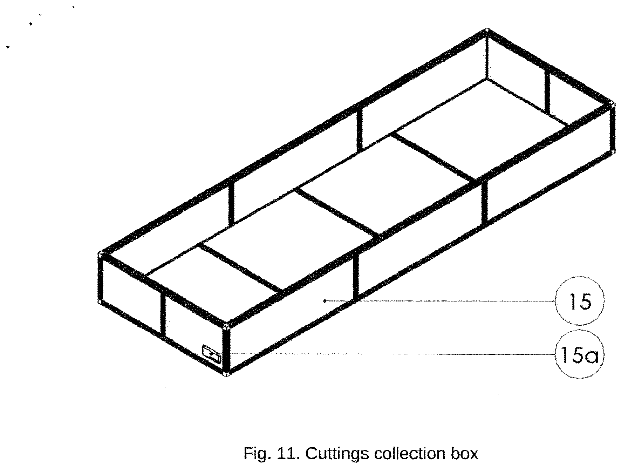

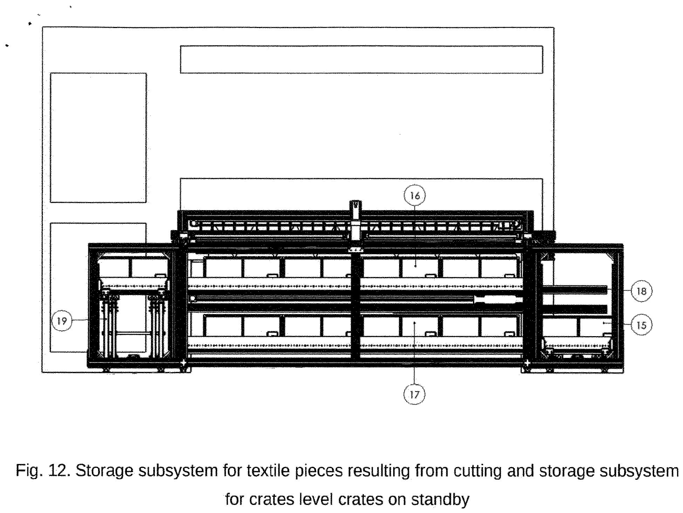

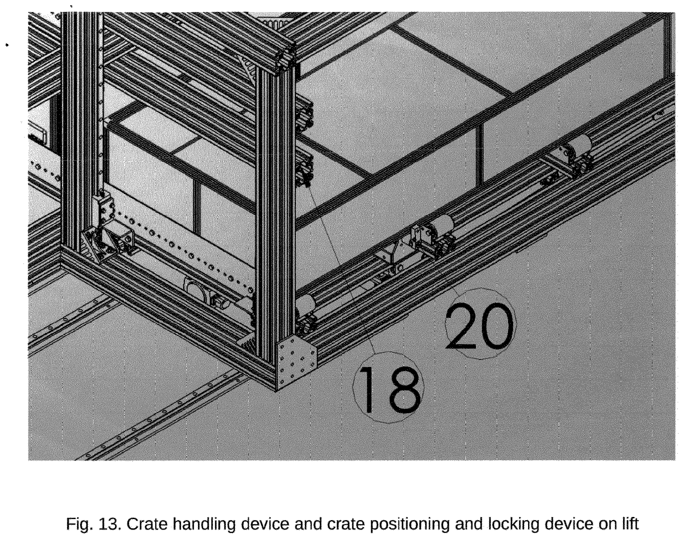

The following is an embodiment of the invention in connection with Figures 1 to 14 representing:
Fig 1 System overview
Fig 2 Integrated information flow using ancillary subsystems
Fig 3 Textile cutting equipment
Fig 4 Template for checking the dimensions of a part
Fig 5 Block diagram of the recognition and measurement engine
Fig 6 Graphical representation of identified defects
Fig 7 3D system representation
Fig 8 Cut piece clamping subsystem
Fig 9 Detail of subsystem in Fig 8
Fig 10 Cut piece pulling subsystem
Fig 11 Cuttings collection box
Fig 12 Storage subsystem for textile pieces from cutting and storage subsystem for crates level crates on standby
Fig 13 Crate handling device and crate positioning and locking device on lift
Fig 14 Hardware-Software interaction scheme

The system for video inspection of the textile cutting operation, video inspection and selective collection of finished products according to the present invention is mounted on an automatic laser/knife cutting coordinate cutting equipment.

For the automation of the textile cutting process by laser or knife, a solution is presented that integrates several subsystems, which ensure the quality of the cut pieces, but also their sorting and selective packaging.

In some situations, the fabric is loaded into the cutting machine assembly from a stack.

The textile is usually delivered in the form of a roll **1.** This is loaded into the cutting machine assembly **2.** The textile material is unwound and passed through a stretching assembly **3** and transported via a conveyor **5** to a first textile material inspection subsystem **4.**

The decisions of the fabric video inspection subsystem **4** are transmitted to a fabric defect marking assembly **6,** which is mounted at the top of the conveyor **5.**

Further, the system includes the cutting machine **7** and downstream of the cutting area, a second subsystem for video inspection of the textile cutting operation **9** is installed.

In other machines, video inspection subsystems can also be positioned under or next to the conveyor.

In the description below, the video inspection subsystem refers to the entire hardware-software assembly that aims to inspect laser or knife cut parts for the purpose of validating the cut and measurement of dimensions extracted from the CAD file, as well as saving inspection information for traceability purposes.

The system, according to the invention, further comprises image collection equipment consisting of one or more cameras, processing equipment with graphic accelerator, an encoder, user authentication equipment and equipment for reading traceability data.

In the description below, the mechanism downstream of the video inspection subsystem refers to the entire electro-mechanical assembly used to sort components according to the information from the video inspection subsystem.

In the description below, the PLC refers to the programmable logic controller that receives information from the video inspection subsystem in order to control the pick-and-place mechanism for sorting components.

The video inspection subsystem communicates with the PLC programmable logic controller via a high-speed interface. Periodically, the video inspection system reads a signal called a heartbeat signal from the PLC registers to validate the connection between the two systems.

The conveyor **5** is mechanically connected to an encoder, which is further read in real time by the PLC programmable logic controller, the position of the encoder being used to calculate in real time the conveyor belt position of the conveyor **5.**

The video inspection subsystems constitute the central control part of the entire system, according to the invention, and have the following functional components:
1. CAD file loading and interpretation equipment **A,** which, depending on the contours defined on the layers in the drawing, defines both the measurement dimensions (dimensions on the X and Y axes) between the cutting contours and the measurement tolerances. This equipment also identifies the number of columns under which the pieces will run on the conveyor belt and defines the number of suction cups of the pick-and-place mechanism to be used for each column.
2. acquisition equipment **B**, which is responsible for acquiring images from multiple cameras and stitching them together to form the overall picture.
3. image pre-processing equipment **C**, handles the transformations needed to increase contrast and remove noise from images.
4. material detection equipment **D**, is designed to detect the edge of the fabric on the conveyor belt. This detection has a dual purpose: a) the metal strip to the left and right of the material is cut out of the image so that only the material is kept in the image, b) the information about the positioning of the material on the belt together with information extracted from the CAD describing the number of columns and the distance between them is compiled by the video inspection system to decide which of the pick-and-place system's suction cups will be used to pick up each component on the belt.
5. column segmentation equipment **E**, is used to segment each column according to their positions in the CAD file. The images on each column can then be processed in parallel.
6. the component segmentation equipment **F**, is designed to identify the component in the image according to the start-cut signal provided by the PLC programmable logic controller. This signal is transmitted from the laser/cutting machine to the PLC, which then transmits it to the video inspection system. This signal is transmitted at the beginning of each cutting cycle with a fixed period. Depending on the physical distance between the laser/cutting machine and the video cameras, and the displacement between the columns in the CAD, the encoder position can be calculated when a component has completely passed the camera, so the image is completely acquired.
7. the validation and measurement equipment **G**, has the role of identifying the cutting contours in the segmented component, making measurements and validating the outer contour according to the information extracted from the CAD. In addition, this equipment transmits to the PLC the results of the component validation (OK/NOK), which are then used by the PLC to control the cut piece clamping assembly **12** that sorts the components.
8. the material verification equipment **H** is designed to identify and report material defects using artificial intelligence (Al) techniques.
9. results reporting and traceability equipment **I**, has the role of storing all information related to the validation, inspection and measurement of components and material, as well as integrating with industrial traceability systems to transmit this information. In addition, the subsystem provides the operator with a real-time view of the components being measured and their results.

Depending on the decisions of the fabric video inspection system **4,** the cutting machine **7** can avoid cutting off defective pieces. An advantageous solution is the integration of the textile video inspection subsystem **4** with the cutting machine **7** to eliminate the marking process.

After the textile material has been cut into pieces **8** and has passed the video inspection subsystem **9** of the cutting operation, it is conveyed to a textile cutting defect marking assembly **10,** and a modular pick-up and gripping assembly **12** of the cut pieces **8** and then to a pulling system **14** of the cut piece **8.**

Depending on the decisions of the fabric video inspection subsystem **4,** the fabric defect marking assembly **6** and the fabric cutting defect marking assembly **10,** mark the affected piece and/or for a more advantageous solution, mark the affected area.

Following the marking operation, the cut pieces **8** that meet the quality requirements are picked up by a cut piece pulling assembly **14** and transported to the cut piece collection box **15,** and the cut pieces **8** that do not meet the quality requirements are gravitationally transferred to the waste material collection assembly **13.**

In an advantageous assembly, the technological scrap **11,** i.e. the cut pieces which do not meet the quality requirements, are dropped by gravity into the waste material collection assembly **13** or taken up by a roller assembly installed above the conveyor **5.**

In order to achieve the pick-up of the cut pieces **8** which have been validated by the second fabric cutting video inspection subsystem **9** and/or by the first fabric video inspection system **4,** the cut piece gripper assembly **12** is provided with a modular configuration consisting of several pistons **12a** and suction cups **12b** distributed over the width of the conveyor **5.** Each piston-suction cup pair is individually controlled, depending on the position of the cut piece **8** and the video inspection result.

The individual control of each piston-suction cup pair reduces the need for spare parts in the suction cups, as only the suction cups required to lift the workpiece are operated, which reduces air consumption and provides increased flexibility to the workpiece pick-up process **8.** The role of the workpiece gripper assembly **12** is to sort workpieces **8** that meet the quality requirements from workpieces **8** that do not meet the quality requirements.

Another role is to pick up the cut piece **8** that meets the quality requirements, and lift it off the conveyor **5,** so that the pulling assembly **14** can execute its pick-up.

In another advantageous assembly, the cut-piece clamp assembly **12** may be designed such that the lowering of the suction cups **12b** is performed integrally, but the actuation thereof individually.

The cut piece pick-up and gripping assembly may have other configurations or components, which do not include pistons and suction cups.

After picking up and sorting the cut pieces **8,** the cut piece pulling assembly **14** moves from the standby position to the pick-up position and the cut piece gripping assembly **12** is actuated, which disengages the suction cups.

From the pick-up position, the cut piece pulling assembly **14** starts moving to the cut piece release position **8,** then releases the cut piece **8** into the collection crate **15,** part of the cut piece storage subsystem **16.**

After performing the cut piece release step **8,** the cut piece pulling assembly **14** returns to the standby position.

The travel speeds when placing the cut pieces **8** in the cut piece collection box **15,** are configurable for each individual project to eliminate the sail effect.

The cut piece pulling assembly **14** is equipped with cut piece presence sensors **8** and monitors the number of pieces in each cut piece collection bin **15,** and whether the piece has been retrieved from the cut piece gripping assembly **12.**

Each cut piece collection crate **15** is equipped with **15a** RFID tags for managing the flow of full or empty crates in process. To avoid crate deformation during use and/or transport and to increase their positioning accuracy, they are made of aluminum profiles and compact polycarbonate.

Labels **15a** are attached to crate **15.** They are recorded in the system database in order to monitor the position of the crate within the storage subsystem **16 of the** textile pieces resulting from the cutting and the storage subsystem of the crates **17** level of the crates in waiting.

With RFID technology integrated on the collection crate **15,** the required traceability data of the cut pieces **8** are ensured. This information can be transmitted to a centralized ERP / ERP / SAP IT subsystem for accurate material availability data.

In an advantageous assembly, to optimize space, the storage subsystem for pieces **16** of textile material resulting from cutting is mounted above the storage subsystem for crates **17** at the level of waiting crates.

In another advantageous assembly, for reducing the changeover time of the cut piece collection crate **15,** the crate storage subsystem **17** level waiting crates can be used for storing full crates.

The positioning of the cut piece collection crates **15** on each level is performed by the crate handling device **18** and the level change is performed by the crate transfer device between levels / crate lift **19s** and **19d.**

The role of the crate handling device **18** is to move one cut piece collection crate **15** loaded with cut pieces **8** meeting the quality requirements from the cut piece storage subsystem **16** to the platform of the crate transfer device **19d** between levels/right crate lift.

A crate positioning and locking device on lift **20** locks crate **15** for lowering. When the crate position verification procedure confirms the position of the crate, the crate is lowered by the device **19d.** Once at the lower limit, the positioning device **20** releases the crate and the crate is picked up by the handling device **18** and loaded into the crate storage subsystem **17.**

In another assembly, the crate handler **18,** in turn, unloads an empty cut piece collection crate **15** from the pending crate storage subsystem **17.** This is pushed onto the platform of the interlevel crate transfer device/crate lift - left **19s.** The platform **19s** is raised to the level of the cut piece storage subsystem **16** cut piece collection crate 15 is then transferred to the subsystem **16** by means of the device **18.**

In another mode of use, only part of the crate transfer device can be used between levels / crate lift **19s** and **19d.**

A great advantage from a work safety point of view is the crate positioning and locking device on the lift **20** which checks and corrects the position of each crate before it is picked up by the crate handling device **18.**

A guard **21** when loading and unloading the crate is intended to protect the operator from moving parts when transferring the crate between levels.

The system has two modes of operation:
- Automatic: the configuration of the **8** cut piece pickup and suction cup activation dimensions is taken from the video system.
- Manual: the above configuration is set up manually by a technician.

The application itself is complex because it incorporates multiple subsystems that require complex control logic, both on the image acquisition side, pre-processing for contour sharpening, processing of CAD files and on the side of extracting dimension definitions, recognizing the CAD associated with the part in the image and actually measuring the defined dimensions.

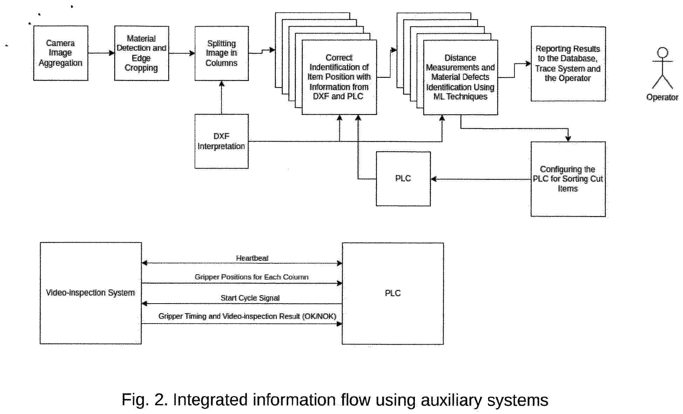

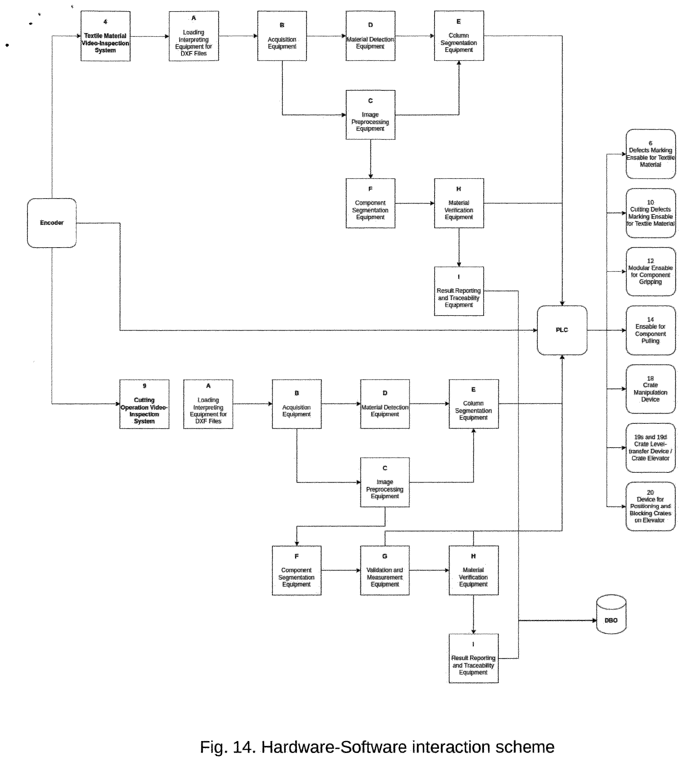

The general scheme of this chain is shown in Figures 2 and 14.

The system according to the invention can be used with only the first video inspection subsystem 4, with or without the defect marking assembly **6,** or with both video inspection subsystems **4** and **9** and only with or without the second defect marking assembly **10.**

In another embodiment, the system may have only the second video inspection subsystem **9** and with or without the defect marking assembly **10.**

1. System for video inspection of the textile cutting operation, for video inspection of the textile material before cutting and for selective collection of the finished products mounted on an automatic laser cutting equipment or coordinate cutting knife, **characterized in that** the textile material unwound from the roll **(1)** and passed through the stretching assembly **(3),** is conveyed via a conveyor **(5)** to a first textile material video inspection subsystem **(4)** which transmits information to a defect marking assembly **(6)** arranged at the top of the conveyor **(5),** downstream of the cutting machine **(7)** and the cutting area, a second textile material cutting operation video inspection subsystem **(9)** is installed, after video inspections and marking of textile material defects and cutting defects with a defect marking assembly **(10),** the cut pieces **(8)** are conveyed to a modular pick-up and gripping assembly **(12)** and then to a pulling assembly **(14)** of the cut piece **(8), and** then transported to a collection crate **(15)** or to a waste material collection assembly **(13),** the cut piece pick-up and gripping assembly **(12)** having a modular configuration, the cut pieces being picked up and released into the collection crates **(15),** which are part of a storage subsystem **(16),** under which storage subsystem **(17) the** cut pieces are arranged in waiting crates, the positioning of the collection crates **(15)** with cut pieces on each level being carried out by means of a crate handling device **(18)** and the level change being carried out by a crate transfer device between levels/crate lift **(19s, 19d),** a crate positioning and locking device on the lift **(20)** checking and correcting the position of each crate before it is taken over by the crate handling device **(18).**

2. Video inspection system according to claim 1, **characterized in that** the central control part of the video inspection subsystems **(4, 9)** has as functional components CAD file loading and interpretation equipment **(A)** , equipment for acquiring **(B)** images from multiple cameras and forming the overall image, image preprocessing equipment **(C),** a fabric detection equipment **(D)** which detects the edge of the fabric on the conveyor belt, a column segmentation equipment **(E)** which has the function of segmenting each column of fabric according to their positions in the CAD file so that the images of each column can then be processed in parallel, a component segmentation equipment **(F) which has the** function of identifying the component in the image according to the start-cut signal provided by the PLC, the signal transmitted by the cutting machine, a validation and measurement equipment **(G)** which identifies the cutting contours of the segmented component, carries out the measurements and the validation of the outer contour according to the information extracted from the CAD file and transmits to the PLC programmable logic controller the results of the validation of the components (OK/NOK), the information being subsequently used to control the mechanism which sorts the components, the identification and reporting of material defects is performed by material verification equipment **(H),** the storage of all information related to the validation, inspection and measurement of components and material, and the integration with industrial traceability systems for the transmission of this information is performed by reporting and traceability equipment **(I).**

3. Video inspection system according to claim 1, **characterized in that** the pick-up and gripper assembly (**12** ) comprises pistons **(12a)** and suction cups **(12b)** distributed over the width of the conveyor **(5).**

4. The video inspection system according to claim 1, **characterized in that** the cut piece pulling assembly **(14)** is equipped with cut piece presence sensors **(8)** and monitors the number of pieces in each cut piece collection bin **(15)** as well as whether the piece has been picked up from the pick and place assembly **(12).**

5. Video inspection system according to claim 1, **characterized in that** each collection crate **(15)** of cut pieces is equipped with tags **(15a)** with RFID technology for managing the flow of full or empty crates in process, by monitoring the position of the crate within the storage subsystem **(16)** of the cut pieces of textile material and within the crate storage subsystem **(17)** of the crate level in the waiting crate, with RFID technology integrated on the collection crate **(15),** the required traceability data of the cut pieces **(8)** is provided, which information is transmitted to the centralized computer subsystem.

## Claims

1. System for video inspection of the textile cutting operation, for video inspection of the textile material before cutting and for selective collection of the finished products mounted on an automatic laser cutting equipment or coordinate cutting knife, **characterized in that** the textile material unwound from the roll **(1)** and passed through the stretching assembly **(3),** is conveyed via a conveyor **(5)** to a first textile material video inspection subsystem **(4)** which transmits information to a defect marking assembly **(6)** arranged at the top of the conveyor **(5),** downstream of the cutting machine **(7)** and the cutting area, a second textile material cutting operation video inspection subsystem **(9)** is installed, after video inspections and marking of textile material defects and cutting defects with a defect marking assembly **(10),** the cut pieces **(8)** are conveyed to a modular pick-up and gripping assembly **(12)** and then to a pulling assembly **(14)** of the cut piece **(8), and** then transported to a collection crate **(15)** or to a waste material collection assembly **(13),** the cut piece pick-up and gripping assembly **(12)** having a modular configuration, the cut pieces being picked up and released into the collection crates **(15),** which are part of a storage subsystem **(16),** under which storage subsystem **(17) the** cut pieces are arranged in waiting crates, the positioning of the collection crates **(15)** with cut pieces on each level being carried out by means of a crate handling device **(18)** and the level change being carried out by a crate transfer device between levels/crate lift **(19s** , **19d),** a crate positioning and locking device on the lift **(20)** checking and correcting the position of each crate before it is taken over by the crate handling device **(18).**

2. Video inspection system according to claim 1, **characterized in that** the central control part of the video inspection subsystems **(4, 9)** has as functional components CAD file loading and interpretation equipment (**A**) , equipment for acquiring **(B)** images from multiple cameras and forming the overall image, image preprocessing equipment **(C),** a fabric detection equipment **(D)** which detects the edge of the fabric on the conveyor belt, a column segmentation equipment **(E)** which has the function of segmenting each column of fabric according to their positions in the CAD file so that the images of each column can then be processed in parallel, a component segmentation equipment **(F) which has the** function of identifying the component in the image according to the start-cut signal provided by the PLC, the signal transmitted by the cutting machine, a validation and measurement equipment **(G)** which identifies the cutting contours of the segmented component, carries out the measurements and the validation of the outer contour according to the information extracted from the CAD file and transmits to the PLC programmable logic controller the results of the validation of the components (OK/NOK), the information being subsequently used to control the mechanism which sorts the components, the identification and reporting of material defects is performed by material verification equipment **(H),** the storage of all information related to the validation, inspection and measurement of components and material, and the integration with industrial traceability systems for the transmission of this information is performed by reporting and traceability equipment **(I).**

3. Video inspection system according to claim 1, **characterized in that** the pick-up and gripper assembly (**12** ) comprises pistons **(12a)** and suction cups **(12b)** distributed over the width of the conveyor **(5).**

4. The video inspection system according to claim 1, **characterized in that** the cut piece pulling assembly **(14)** is equipped with cut piece presence sensors **(8)** and monitors the number of pieces in each cut piece collection bin **(15)** as well as whether the piece has been picked up from the pick and place assembly **(12).**

5. Video inspection system according to claim 1, **characterized in that** each collection crate **(15)** of cut pieces is equipped with tags **(15a)** with RFID technology for managing the flow of full or empty crates in process, by monitoring the position of the crate within the storage subsystem **(16)** of the cut pieces of textile material and within the crate storage subsystem **(17)** of the crate level in the waiting crate, with RFID technology integrated on the collection crate **(15),** the required traceability data of the cut pieces **(8)** is provided, which information is transmitted to the centralized computer subsystem.

## Amended claims

### Amended claims in accordance with Rule 137(2) EPC.

1. A system for video inspection of the textile cutting operation, for video inspection of the textile material before cutting and for selective collection of the products consists of a stretching assembly (**3)** of the textile material wound on a roll (**1)**, a conveyor (**5),** subsystems for video inspection of the textile material before and after the cutting operation comprising video cameras, devices for absorbing, transporting and placing in various magazines the cut pieces and a laser cutting equipment (**7**) as well as equipment for processing, reading or storing data, **characterized in that** a first subsystem (**4)** for video inspection of the textile material before the cutting operation transmits information to a defect marking assembly (**6**) arranged at the top of the conveyor (**5**), and a second subsystem (**9)** for video inspection (**7**) of the cutting operation, a cutting defect marking assembly (**10**) detected on the textile material, and a modular assembly (**12**) for picking up and gripping the cut pieces (**8**) consisting of pistons (**12a**) and suction cups (**12b**) distributed over the width of the conveyor (**5**), a pulling assembly (**14**) for the cut pieces (**8**), which pieces are subsequently directed to a cut piece storage subsystem (**16**), consisting of collection crates (**15)** positioned on several levels, a storage subsystem (**17**) for waiting crates, a crate handling device (**18**), a crate transfer device between levels/lift (**19s, 19d**), provided with a crate positioning and locking device (**20**) on the lift, which checks and corrects the position of each crate before it is taken over by the crate handling device (**18**), **and wherein** the control of the video inspection subsystems (**4**) and (**9**) is performed by equipment for loading and interpreting (**A**) DXF files, equipment for acquiring (**B**) images received from multiple cameras and forming an overview image, an image pre-processing equipment (**C**), a textile material detection equipment (**D),** a textile material column segmentation equipment (**E**) according to their positions in the DXF file, a component segmentation equipment (**F**), which has the function of identifying the component in the image according to the start-cut signal transmitted by the cutting equipment (**7**) and provided by the PLC programmable logic controller, a validation and measuring equipment (**G**) which identifies the cutting contours in the segmented component, the information being subsequently used for controlling the mechanism which sorts the components, the identification and reporting of material defects being performed by a material checking equipment (**H**), saving all validation information, inspection and measurement of components and textile material, and integration with industrial traceability subsystems for the transmission of this information is performed by reporting and traceability equipment (**I**), data processing equipment with graphic accelerator, encoder, user authentication equipment and traceability data reading equipment.

2. A system for video inspection of the textile cutting operation, for video inspection of the textile prior to cutting and for selective collection of the products according to claim 1, **characterized in that** the cut piece pulling assembly (**14**) on the conveyor is equipped with cut piece presence sensors (**8**) to monitor the number of pieces in each collection bin (**15**), as well as whether the pieces have been picked up from the modular cut piece picking and gripping assembly (**12**).

3. System for video inspection of the textile cutting operation, for video inspection of the textile material before cutting and for selective collection of the products according to claims 1 and 2, **characterized in that** each collection crate (**15**) of cut pieces is equipped with tags (**15a**) with RFID technology for managing the flow of full or empty crates in the process, monitoring also the position of each crate within the storage subsystem (**16**) of the textile pieces resulting from the cutting and within the storage subsystem of the waiting crates (**17**), the integrated RFID technology providing the required traceability data of the cut pieces (**8**), which information is transmitted to the hardware-software assembly controlling the whole system.

4. System for video inspection of the textile cutting operation, for video inspection of the textile material before cutting and for selective collection of the products according to claims 1, 2, 3, **characterized in that** the positioning of the cut piece collection crates (**15)** on each level is carried out by means of a crate handling device (**18),** the level change is carried out by means of a crate transfer device between levels / crate lift (**19s)** and (**19d),** and the locking of the crates **(15)** on the lift is carried out by means of a locking device (**20**) which checks and corrects the position of each crate before it is taken over by the crate handling device (**18)**.
